# EUROPEAN PATENT APPLICATION

(11) **EP 1 202 478 A1**
(43) Date of publication of application: **02.05.2002**
(21) Application number: 00123608.2
(22) Date of filing: 28.10.2000
(51) Int. Cl.: H04B 10/18, H04J 14/02, H04Q 11/00, G02F 1/35

(54) **Use of OPA for switching and routing in WDM networks**

(71) Applicant: TELEFONAKTIEBOLAGET L M ERICSSON (publ), 126 25 Stockholm (SE)
(72) Inventor: Popov, Sergei, 120 57 Arsta, Stockholm (SE); Evgeny, Vanin, 125 73 Älvsjö, Stockholm (SE)
(74) Representative: Lövgren, Tage

(57) **Abstract**

The present invention is an arrangement for utilizing optical information sent through an optical network from a sending site A to a at least one receiving site B1, B2, B3. The arrangement comprises an optical parametric amplifier OPA for receiving the optical information sent at a set of input wavelengths *λ*₁ ÷ *λ*_{*n*}. The arrangement also comprises a mixer in the amplifier OPA for mixing the input wavelengths λ₁ ÷ λ_{*n*}, with an optical pump wavelength λ_{*p*} and means for generating a set of optical conjugate copy wavelengths 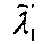 ÷ 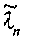 extracted from the set of input wavelengths λ₁÷λ_{*n*}. A WDM-splitter is used for separating the set of input wavelengths λ₁÷λ_{*n*} from the set of conjugate copy wavelengths 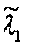 ÷ 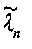 . Fibers are used for forwarding the set of input wavelength and/or the set of conjugate copy wavelengths 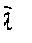 ÷ 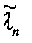 individually to the at least one of the receiving site B1, B2, B3.

## Description

### TECHNICAL FIELD OF THE INVENTION

The present invention relates to a method and an arrangement to provide efficient transmission of optical information in an optical transmission system.

### DESCRIPTION OF RELATED ART

Optical transmission systems utilizing optical fibers as the optical signal transmission medium are gaining in popularity. This is especially because their substantial immunity to interference or external influences and their ability to transmit a great number of communications channels in the same physical medium - the optical fiber, without cross talk between the channels.

Modern optical networks contain a number of different optical devices to manipulate information in the form of optical signals transmitted through a network of optical fiber links. The main principles of design of optical networks require versatile processing of optical signals to provide necessary network flexibility. Such a processing assumes channel routing, add/drop and switching functions, conversion of optical signals from one to another wavelength channel, amplification of optical signals etc. For highspeed transmission, the effect of chromatic dispersion plays an important role. It leads to additional receiver penalty due to temporal spreading of optical signals travelling through optical fibers. An optical device that compensates for the dispersion is needed to restore the quality of the optical signal. Another key element is an optical amplifier, which compensates for optical losses in a transmission link between transmitter and receiver. There are many known different types of optical amplifiers, such as Erbium-doped fibers amplifiers, semiconductor optical amplifiers, Raman amplifiers and optical parametric amplifiers. There are a number of optical devices that can separately perform amplification, wavelength conversion or dispersion compensation of the optical signal. In the US patent US 5,274,495 an optical parametric amplifier is described. The optical amplifier provides easy achieved phase matching between pump light and signal light. Time spreading of optical pulses due to chromatic dispersion of a transmission fiber can be compensated in a various ways. The most commonly used techniques are based on the dispersion compensation fibers and chirped Bragg gratings.

### SUMMARY OF THE INVENTION

The present invention solves the problem with the necessity to use many different optical devices to achieve versatile processing of optical signals in an optical transmission system in order to provide network flexibility.

The problem is solved by the invention by duplicate optical information at a set of input wavelengths by extracting a set of conjugate copy wavelengths out of the set of input wavelengths. The input wavelengths and the conjugate copy wavelengths are then used separately from each other to provide network flexibility.

More in detail, the invention disclosed is a method to utilize optical information sent at a set of input wavelengths through an optical network from a sending site. The method comprises the following steps:
- Optical information is arrived to an optical parametric amplifier.
- The input wavelengths are mixed with an optical pump wavelength in the optical parametric amplifier and a set of optical conjugate copy wavelengths are extracted from the set of input wavelengths in the optical parametric amplifier. As result two sets of amplified wavelengths are created, the set of amplified conjugate copy wavelengths and the set of amplified input wavelengths.
- The set of conjugate copy wavelengths are separated from the set of input wavelengths.
- The set of conjugate copy wavelengths are sent to, and received by, a first receiving site.

An arrangement according to the invention includes an optical parametric amplifier for receiving the optical information sent at a set of input wavelengths. It also includes means in the amplifier for mixing the input wavelengths, with an optical pump wavelength and means for generating a set of optical conjugate copy wavelengths extracted from the set of input wavelengths. Means for separating the set of input wavelengths from the set of conjugate copy wavelengths are also included in the arrangement and means for forwarding the set of input wavelength and the set of conjugate copy wavelengths to at least one receiving site.

The object of the invention is to combine several functions into one arrangement to provide an efficient transmission of optical information in order to create network flexibility.

An advantage with the invention is the possible reception of a signal, free from chromatic dispersion, without having to compensate for chromatic dispersion along the path from a sending site to a receiving site.

Another advantage is the reception of a fully amplified signal without having to use amplifiers along the path from a sending site to a receiving site.

Yet another advantage is the possibility to use the two sets of wavelengths carrying the same information, as redundancy, and thereby appropriate safety to the system.

Yet another advantage is the possibility to contrary to traditional transponders do all the processing of wavelength conversion in the optical domain only.

Yet another advantage is that the protection link in the case of redundancy, after e.g. a fiber break accidentally can be longer than the main transmission fiber line. The amplification and dispersion compensation features of the idler channels at the conjugate wavelengths can then be very useful to achieve the desired performance without additional amplifiers and dispersion compensation elements.

The invention will now be described more in detail with reference to exemplifying embodiments thereof and also with reference to accompanying drawings.

### DESCRIPTION OF THE DRAWINGS

Figure 1 is a block schematic illustration of a part of a Wavelength Division Multiplexing optical network comprising one sending site and two receiving sites.
Figure 2 is a diagram showing how several idler wavelengths are generated out of several WDM input wavelengths.
Figure 3 is a flow chart disclosing the most important steps of a method to transfer optical information from one site to another.
Figure 4 is a flow chart disclosing the most important steps of a method to transfer optical information from one site to two receiving sites.
Figure 5 is a block schematic illustration of a part of a Wavelength Division Multiplexing optical network with one sending site and one receiving site.
Figure 6 is a flow chart disclosing the most important steps of a method to redundant transfer optical information from a sending site to a receiving site.
Figure 7 is a block schematic illustration of an arrangement according to the invention.

### DESCRIPTION OF PREFERRED EMBODIMENTS

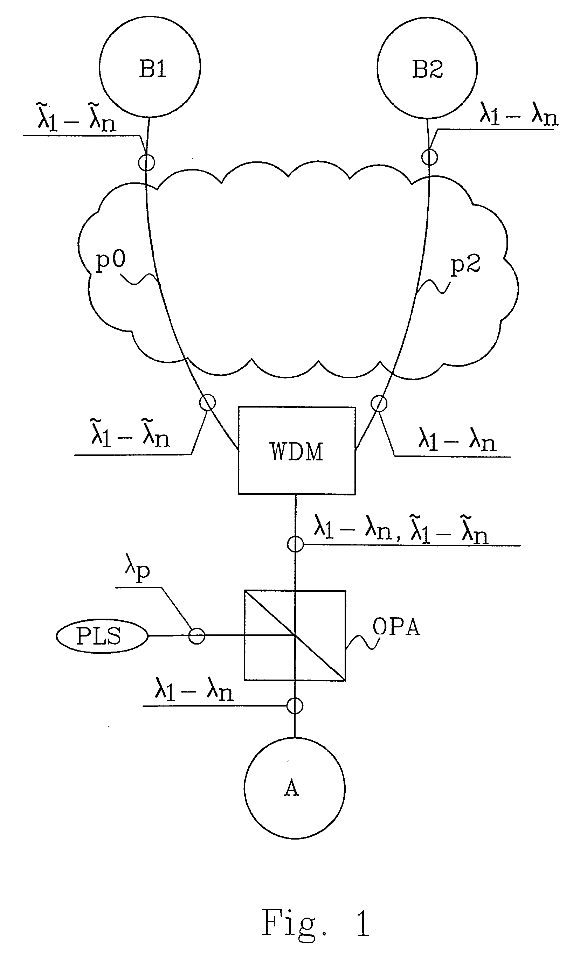

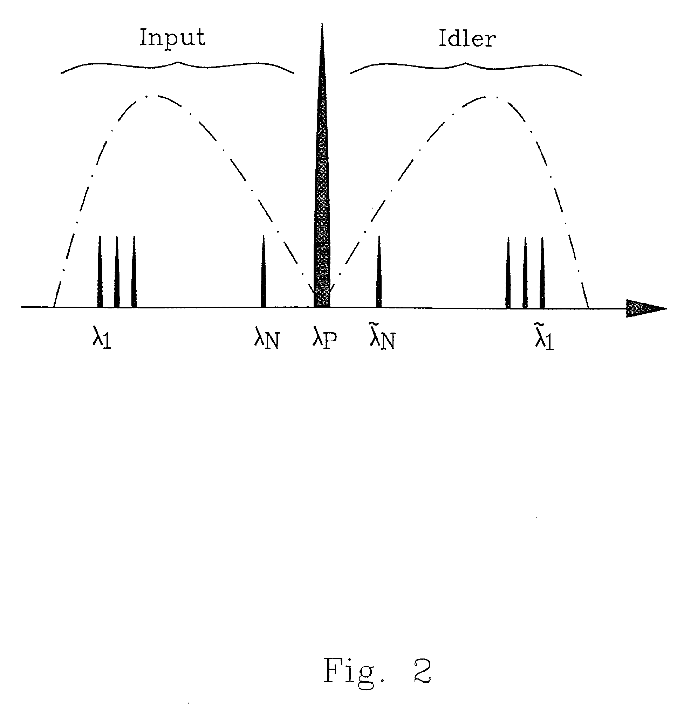

Figure 1 discloses a WDM optical network (WDM: Wavelength Division Multiplexing). Wavelength Division Multiplexing WDM involves a combination of a set of traffic-carrying optical signals onto a single fiber pair. It is evident that these signals must not interact with each other during transmission and that they must be separated for reception at the far end. This is achieved by operating each optical signal on a separate wavelength. In figure 1 can be seen how one sending site A is connected to two receiving sites B1 and B2. The sending site A is connected to the receiving sites B1 and B2 via sites in the optical WDM network. These additional sites can not be seen in the figure and are only symbolized with a cloud symbol in figure 1. The sending site A is connected to an input of an optical parametric amplifier OPA. A Pump Light Source PLS is connected to another input of the optical parametric amplifier. The optical amplifier OPA converts an input signal consisting of several WDM channels at a set of input wavelength and generates idler channels with the same information as the input signal but at corresponding conjugate copy wavelength. This can be seen and will be further explained later in figure 2. An output of the optical amplifier OPA is connected to an input of a WDM splitter. The WDM splitter divides the optical input signal carrying the input wavelengths and the conjugate copy wavelengths, into two parts. The two parts, carrying the input wavelengths and the conjugate wavelengths, are each one transmitted to one of the receiving sites B1 and B2. The WDM splitter can be either separated from or being a part of the optical parametric amplifier OPA. The two output signals, the input wavelengths and the conjugate wavelengths pass other sites in the WDM network on their way to the receiving sites B1 and B2.

Figure 2 discloses a diagram where the operational principle after mixing an input signal with a pump wave signal in the optical parametric amplifier OPA is shown. Parametrical amplification occurs due to nonlinear interaction of pump irradiation with an input signal in optically nonlinear medium. Thus, an optical parametrical amplifier mainly exists of two parts: pump source and gain medium. Operational principle of an optical parametrical amplifier of four wave mixed light, which is a well known phenomenon, is sketched in figure 2. As an example, an input optical signal with wavelength λ₁ is mixed with an optical pump wave at the wavelength λ_{*P*} in a strongly nonlinear optical material, which not necessarily is fiber. While mixing, the input signal is amplified, and an idler at the wavelength 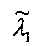 is generated, where 1/ 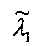 = 2/λ_{*P*} - 1/λ₁. If the input signal consists of several WDM channels λ₁÷λ_{*N*}, as can be seen in figure 2, several idler signals 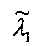 ÷ 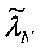 with corresponding wavelengths will be generated. The sign "÷" means all values between the end values. The idler signals constitutes the copy of the optical information carried by the input signals, and the magnitude is comparable to the magnitude of the amplified signal. Thus, two sets of amplified WDM-signals, input and idler, carrying the same information are available at the output of OPA.

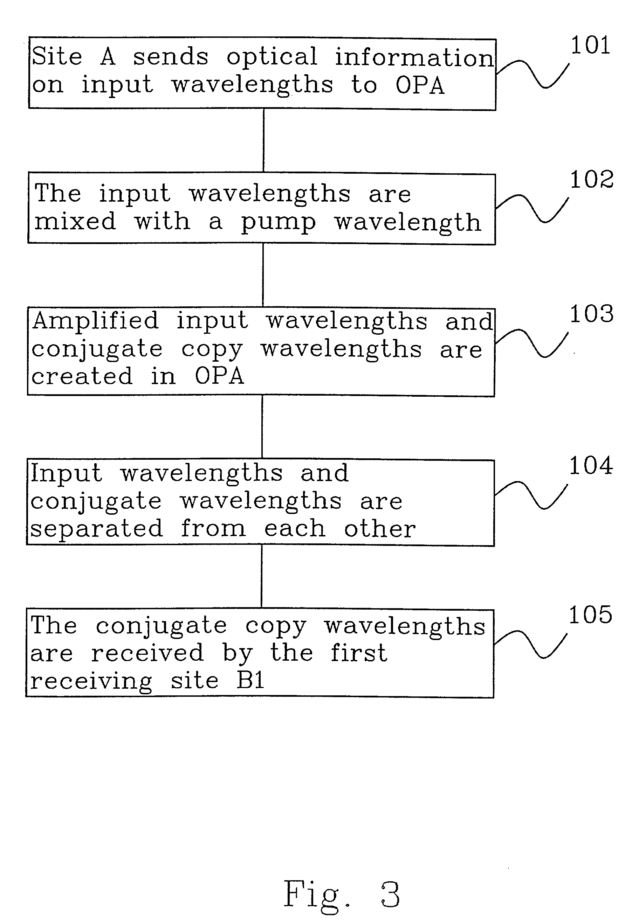

A method according to a first embodiment of the invention will now be analyzed and described. The method will be explained by using the references that already have been mentioned in figure 1 and 2. The most essential steps of the method are disclosed with a flow chart in figure 3. The method below will show the first embodiment where the sending site A transfer optical information at a set of conjugate copy wavelength to the first receiving site B1. Thereafter, the purpose of this type of transfer will be further explained. The method includes the following steps:
- The sending site A sends optical information in channels, on a set of input wavelength λ₁÷λ_{*n*} to the optical parametric amplifier OPA. Each channel is transferred at one input wavelength. In figure 3 this is disclosed with a block 101.
- In the optical parametric amplifier OPA, the input wavelengths λ₁ ÷ λ_{*n*} are mixed with an optical pump wavelength *λ*_{*P*}. In figure 3 this is disclosed with a block 102.
- A set of optical amplified conjugate copy wavelengths 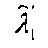 ÷ 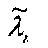 are generated in the optical parametric amplifier OPA. The conjugate copy wavelengths are extracted from the set of amplified input wavelengths λ₁÷λ_{*n*}. In figure 3 this is disclosed with a block 103.
- The set of input wavelengths λ₁÷λ_{*n*} is separated in the WDM splitter from the set of conjugate copy wavelengths 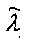 ÷ 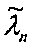 . In figure 3 this is disclosed with a block 104.
- The set of conjugate copy wavelengths 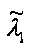 ÷ 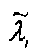 is received by a first receiving site B1. In figure 3 this is disclosed with a block 105.

Each idler at wavelength 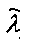 ÷ 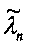 is a conjugate copy of the input signal λ₁÷λ_{*n*}, because their optical spectra are centre symmetrical relative to the optical pump frequency. It means that, if the input signal has a frequency chirp the idler signal will have an opposite frequency chirp and the same pulse shape. This inversion of the signal chirp can be used for dispersion compensation accumulated by the input signal λ₁÷λ_{*n*} which has propagated a certain distance in the fibre link before it arrived at the optical parametric amplifier OPA. The effect of chromatic dispersion causes an optical pulse spreading due to different speed of propagation of group elements of the pulse having different optical frequencies. As a result, the pulse spreading is accompanied by frequency chirp increase with the propagation distance. In case of negative group velocity dispersion, higher optical frequencies propagate faster, and therefore the optical frequency monotonically decreases from leading to trailing front of the pulse. The idler, which is generated in the optical parametrical amplifier OPA from such chirped signal has an opposite chirp, i.e. its leading front has lower optically frequency then the trailing edge. Due to reversed chirp the leading front of the idler pulse will travel slower than the trailing edge, and therefore it will be compressed due to effect of fiber dispersion. When the idler pulse would propagate the same distance in the fiber of the same type (generally speaking the same dispersion distance) as initial pulse did, the initial shape of the pulse would be restored. Thus, the optical parametrical amplifier simultaneously compensates for both dispersion and dispersion slope. Common dispersion fibers do not always compensate for dispersion slope.

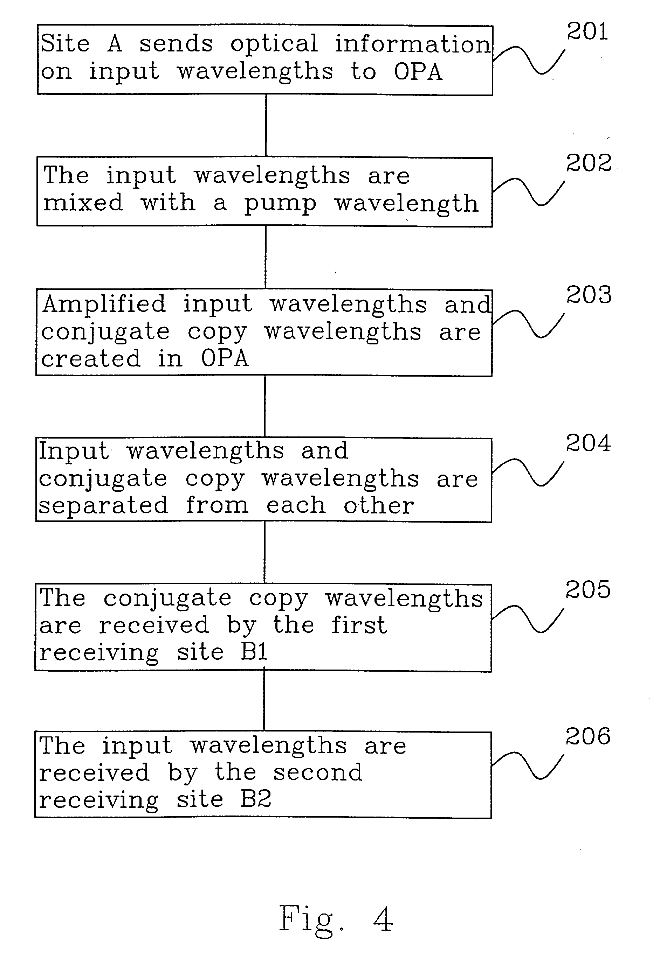

A method according to a second embodiment of the invention will now be analyzed and described. The method will be explained by using the references that already have been mentioned in figure 1 and 2. The most essential steps of the method are disclosed with a flow chart in figure 4. The method below will disclose how the sending site A transfer optical information at a set of conjugate copy wavelength to the first receiving site B1. The same optical information is also transferred at a set of input wavelengths to a second receiving site B2. The purpose of this type of transfer will then be explained. The method includes the following steps:
- The sending site A sends optical information in channels, on a set of input wavelength λ₁÷λ_{*n*} to the optical parametric amplifier OPA. Each channel is transferred at one input wavelength. In figure 4 this is disclosed with a block 201.
- In the optical parametric amplifier OPA, the input wavelengths λ₁÷λ_{*n*} are mixed with an optical pump wavelength λ_{*p*}. In figure 4 this is disclosed with a block 202.
- A set of optical amplified conjugate copy wavelengths 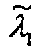 ÷ 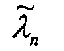 are generated in the optical parametric amplifier OPA. The conjugate copy wavelengths are extracted from the set of amplified input wavelengths λ₁÷λ_{*n*}. In figure 4 this is disclosed with a block 203.
- The set of input wavelengths λ₁÷λ_{*n*} are separated from the set of conjugate copy wavelengths 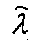 ÷ 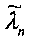 . In figure 4 this is disclosed with a block 204.
- The set of amplified conjugate copy wavelengths 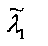 ÷ 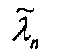 is received by the first receiving site B1. In figure 4 this is disclosed with a block 205.
- The second receiving site B2 receives the set of amplified input wavelengths λ₁÷λ_{*n*}. In figure 4 this is disclosed with a block 206.

The amplified conjugate copy wavelengths, i.e. the idler, is sent to the first receiving site B1 and the amplified input wavelengths, i.e. the input, is sent to the second receiving site B2. The generation of the idler with a converted set of wavelengths from a set of input wavelengths is similar to the functioning of a transponder. Depending on particular conditions or requirements, signals with 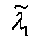 or λ₁ are transmitted on one or another link. Contrary to traditional transponders all the process of wavelength conversion takes place in the optical domain only. This feature allows realizing the conversion of the whole set of wavelengths simultaneously by one device, while the transponder is hardware adjusted for each particular wavelength. The performance of the optical amplifier OPA wavelength converter is not limited by high bit rates of optical signal. This is an advantage when comparing the optical amplifier OPA wavelength converter with a traditional transponder.

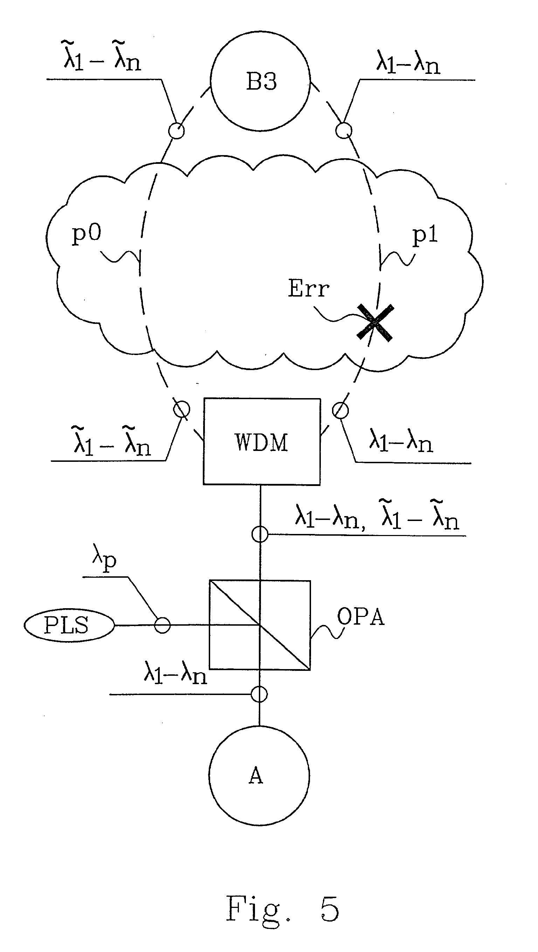

In figure 5 can be seen how the sending site A is connected to one receiving site B3. Like in figure 1, the sites are connected to each other via other sites, only symbolized by a cloud. The sending site A is connected to an input of an optical parametric amplifier OPA. A Pump Light Source PLS is, like in figure 1, connected to another input of the optical parametric amplifier. The optical amplifier OPA converts an input signal consisting of several WDM channels at a set of input wavelength and generates idler channels. An output of the optical amplifier OPA is connected to an input of a WDM splitter. The WDM splitter divides the optical input signal carrying the input wavelengths and the conjugate copy wavelengths, into two parts. The two parts, carrying the input wavelengths and the conjugate wavelengths, are both transmitted to the same receiving site B3 but on separate optical paths P0 and P1. The conjugate copy wavelengths are transferred on the path P0 while the input wavelengths are transferred on the path P1 in figure 5.

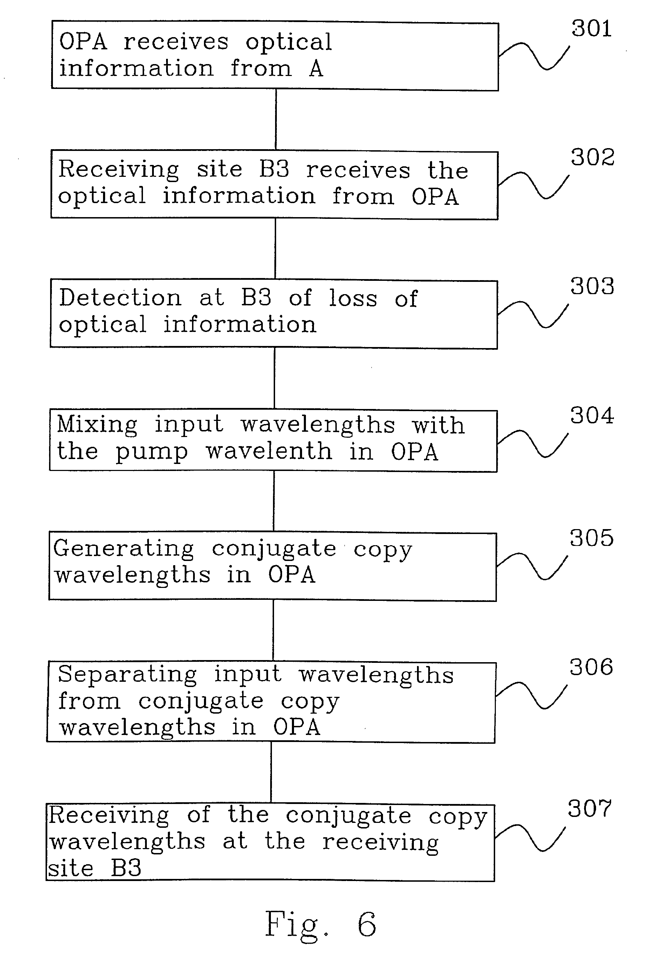

A method according to a third embodiment of the invention will now be analyzed and described. The method will be explained by using the references already mentioned in figure 5. The most essential steps of the method are disclosed with a flow chart in figure 6. The method below will disclose how the sending site A transfer optical information at a set of conjugate copy wavelength to the receiving site B3. At the beginning of the procedure the optical parametric amplifier OPA is deactivated and information is transferred transparent through the optical parametric amplifier OPA at the input wavelengths λ₁÷*λ*_{*n*} from site A on the path P1 to the receiving site B3. After a path error the optical amplifier OPA is activated and the information is instead transferred at the conjugate copy wavelengths 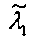 ÷ 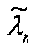 . The error in the path is shown with an X-symbol on the path p1. The method according to the invention includes the following steps:
- The optical parametric amplifier OPA receives the optical information at the input wavelengths λ₁÷λ_{*n*}. In figure 6 this is disclosed with a block 301.
- The receiving site B3 receives the optical information at the wavelengths λ₁÷λ_{*n*} transparently sent via the optical parametric amplifier OPA. In figure 6 this is disclosed with a block 302.
- The receiving site B3 detects loss of received optical information. In figure 6 this is disclosed with a block 303.
- Mixing, in the optical parametric amplifier OPA, the input wavelengths λ₁÷*λ*_{*n*}, with an optical pump wavelength λ_{*p*}. In figure 6 this is disclosed with a block 304.
- Generating, in the optical parametric amplifier OPA, a set of optical conjugate copy wavelengths 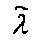 ÷ 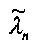 extracted from the set of input wavelengths λ₁÷*λ*_{*n*}. In figure 6 this is disclosed with a block 305.
- Separating the set of input wavelengths λ₁÷*λ*_{*n*} from the set of conjugate copy wavelengths 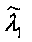 ÷ 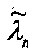 . In figure 6 this is disclosed with a block 306.
- Receiving, by the receiving site B3, the set of conjugate copy wavelengths 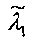 ÷ 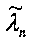 . In figure 6 this is disclosed with a block 307.

The construction of the optical parametric amplifier OPA with a WDM splitter is used as a protection switch in case of main fiber line failure. In a normal operation, when the optical data is transmitted throughout a main transmission line by the input wavelengths, the optical pumping of the optical amplifier OPA is switched off. The amplifier is transparent when it is not pumped, and all the information is transmitted via path P1 without substantial losses. In the case of a main line failure, the OPA is activated by the pump PLS and all information is routed into the path P0 on conjugate wavelengths. The protection link can be longer than the main transmission fiber line, and therefore the amplification and dispersion compensation features of the idler channels at the conjugate wavelengths 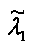 ÷ 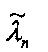 can be very useful to achieve the desired performance without additional amplifiers and dispersion compensation elements.

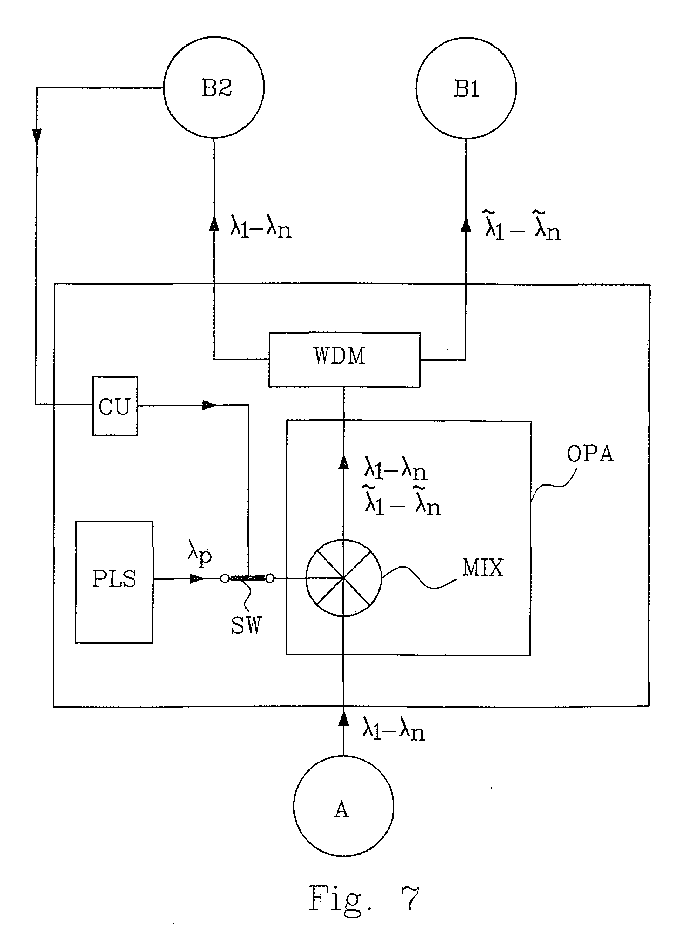

Figure 7 discloses an arrangement according to the invention. An optical parametrical amplifier OPA comprises a mixer MIX. Optical information at input wavelengths λ₁÷λ_{*n*} from a sending site A is mixed in the mixer with a pump wavelength λ_{*p*}. The pump signal comprising the wavelength λ_{*p*} is generated by a pump light source PLS. The output from the mixer is an optical signal comprising a set of amplified input wavelengths λ₁÷*λ*_{*n*} together with a set of amplified conjugate copy wavelengths 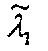 ÷ 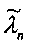 . The two sets of wavelengths λ₁÷λ_{*n*} and 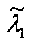 ÷ 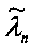 are divided into two parts in a WDM splitter WDM. The two sets of wavelengths are each one transferred on optical paths to receiving sites B1 and B2, alternatively both sets of wavelengths are transferred to the same receiving site. A control unit CU is prepared to receive a signal from one receiving site, which signal indicates loss of optical data. A control signal from the control unit CU affects a switch SW to affect sending or not sending of the pump signal from the pump light source PLS to the optical parametrical amplifier OPA. The switch function is only schematically drawn in the figure.

Different variations are possible within the scope of the invention. For example are the different modules not necessarily located where they have been disclosed in the figures. For example can the WDM splitter WDM be a part of the optical parametrical amplifier OPA. The control unit CU can also for example be a part of the pump light source PLS. The invention is in other words not restricted to the above described and illustrated exemplifying embodiments, and modifications can be made within the scope of the claims.

## Claims

1. Method to utilize optical information sent at a set of input wavelengths (λ₁÷λ_{*n*}) in an optical network from a sending site (A), which method comprises the following steps:
- receiving the optical information by an optical parametric amplifier (OPA);
- mixing, in the optical parametric amplifier (OPA), the input wavelengths (λ₁÷λ_{*n*}), with an optical pump wavelength (λ_{*p*});
- generating, in the optical parametric amplifier (OPA), a set of optical amplified conjugate copy wavelengths ( 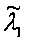 ÷ 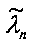 ) extracted from the set of input wavelengths (λ₁÷λ_{*n*}); the method being **characterised by** the following further steps:
- separating the set of input wavelengths (λ₁÷λ_{*n*}) from the set of conjugate copy wavelengths ( 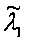 ÷ 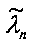 );
- receiving, by a first receiving site (B1), the set of conjugate copy wavelengths ( 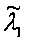 ÷ 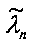 ).

2. Method according to claim 1 which method comprises the following further step:
- receiving by a second receiving site (B2) the set of input wavelengths (λ₁÷λ_{*n*}).

3. Method according to claim 2 whereby the further processing of the optical signals at input wavelengths (λ₁÷λ_{*n*}) and conjugate wavelengths ( 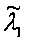 ÷ 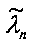 ) are performed in optical domain.

4. Method according to claim 1, where the distance from the sending site (A) and the optical amplifier (OPA) is approximately the same as the distance from the optical amplifier (OPA) and the first receiving site (B1).

5. Method to utilize optical information sent at a set of input wavelengths (λ₁÷λ_{*n*}) in an optical network from a sending site (A), which method comprises the following steps
- receiving the optical information by an optical parametric amplifier (OPA);
- receiving, the optical information via the optical parametric amplifier (OPA), by a receiving site (B3);
- detecting at the receiving site (B3), loss of the received optical information;
- mixing, in the optical parametric amplifier (OPA), the input wavelengths (λ₁÷λ_{*n*}), with an optical pump wavelength (λ_{*p*});
- generating, in the optical parametric amplifier (OPA), a set of optical conjugate copy wavelengths ( 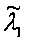 ÷ 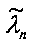 ) extracted from the set of input wavelengths (λ₁÷λ_{*n*}); the method being **characterised by** the following further steps:
- separating the set of input wavelengths (λ₁÷λ_{*n*}) from the set of conjugate copy wavelengths ( 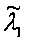 ÷ 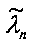 );
- receiving, by the receiving site (B3), the set of conjugate copy wavelengths ( 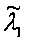 ÷ 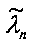 ).

6. Arrangement for utilization optical information sent through an optical network from a sending site (A) to a at least one receiving site (B1, B2, B3), which arrangement comprises an optical parametric amplifier (OPA) for receiving the optical information sent at a set of input wavelengths (λ₁÷λ_{*n*}), means in the amplifier (OPA) for mixing the input wavelengths (λ₁÷λ_{*n*}), with an optical pump wavelength (λ_{*P*}) and means for generating a set of optical conjugate copy wavelengths ( 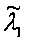 ÷ 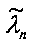 ) extracted from the set of input wavelengths (λ₁÷λ_{*n*}), **characterised by** means for separating the set of input wavelengths (λ₁÷λ_{*n*}) from the set of conjugate copy wavelengths ( 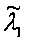 ÷ 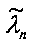 ) and means for forwarding the set of input wavelength and the set of conjugate copy wavelengths ( 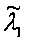 ÷ 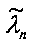 ) to the at least one receiving site (B1, B2, B3).

7. Arrangement according to claim 6, comprising a control unit (CU) prepared to receive an indication of loss of optical information received by one of the receiving sites (B1, B2, B3).

8. Arrangement according to claim 7, comprising a switch function (SW) influenced by the control unit (CU) to facilitate mixing of input wavelength with a pump wavelength.
